Europäisches Patentamt

European Patent Office

Office européen des brevets

(19)

(11) Publication number: **0 103 965**
**A2**

## (12) EUROPEAN PATENT APPLICATION

(21) Application number: **83304426.6**

(22) Date of filing: **01.08.83**

(51) Int. Cl.³: **B 01 D 57/02**
**G 01 N 27/26**

(30) Priority: **20.08.82 GB 8224056**

(43) Date of publication of application:
**28.03.84 Bulletin 84/13**

(84) Designated Contracting States:
**DE GB SE**

(71) Applicant: **IMPERIAL CHEMICAL INDUSTRIES PLC**
**Imperial Chemical House Millbank**
**London SW1P 3JF(GB)**

(72) Inventor: **Burgess, Andrew Nigel**
**1 Willow Drive**
**Chester(GB)**

(74) Representative: **Hall, David Brian et al,**
**Imperial Chemical Industries PLC Legal Department:**
**Patents Po Box 6**
**Welwyn Garden City Herts, AL7 1HD(GB)**

(54) **Electrofocusing apparatus.**

(57) Electrofocusing apparatus comprises a cell having spaced electrodes and a polyion mixture for producing a pH gradient between the electrodes, characterised in that the cell has at least one inlet and a plurality of outlets placed on opposite sides of the polyion mixture such that a flowpath for liquid is provided through the cell from the inlet(s), through the polyion mixture, to the outlets, the flowpath being transverse to the electric field and to the pH gradient and the outlets being spaced along said electric field and pH gradient, the polyions being positioned and immobilised to provide and maintain a pK gradient from one electrode to the other, so that when immersed in an aqueous medium, application of an electrical field by the electrodes will cause migration of protons to give the pH gradient between the electrodes corresponding to the pK gradient, whereby when an aqueous liquid mixture of separable components is caused to flow through the apparatus it may be at least partially divided by the electric field and pH gradient into its different components which leave the apparatus by different outlets.

The immobilised polyions can be provided by ampholytes immobilised by reacting them with a reactive polymerisable material, applying an electric field to form a pH gradient, and polymerising the material. A cheaper alternative comprises a buffering mixture of acidic and basic ion exchange resins, the proportion of acidic to basic resins varying across the apparatus from one electrode to the other.

## ELECTROFOCUSING APPARATUS

This invention relates to electrofocusing apparatus for separating zwitter ions such as proteins from mixtures thereof.

Electrofocusing is a separation technique which is basically electrophoresis carried out in a stable pH gradient increasing from anode to cathode, and to effect separation it relies on the separable species of zwitter ions having different isoelectric points, pI. This technique is now a commercially established technique for separating mixtures of proteins, and so the present invention will be explained mainly by reference to proteins.

Proteins have both amino and carboxylic acid groups which vary in number and proportion from one protein to another. In low pH solutions the amino groups tend to become positively charged and the acid groups neutral, giving the proteins a net positive charge. If the pH is gradually increased, increasing numbers of the acid groups lose protons and become negatively charged, and the amine groups become neutral. Thus in high pH solutions the protein has an overall net negative charge. Between those two extremes is a pH at which the protein has a net charge of zero, this being its isoelectric point, pI. During isoelectric focusing, each protein molecule is attracted to one or other electrode according to its net charge. As it moves towards its attracting electrode it moves up or down the pH gradient, and the direction of that movement is automatically that which reduces its net charge, due to the cathode being positioned at the higher end of the pH gradient and the anode at the lower end. The protein therefore moves only as far as the zone in which its net charge becomes zero, i.e. the zone in which the pH is equal to its pI. Protein molecules having the same pI will similarly all be focused to that same zone, and there they will remain because any displacement will produce a positive or negative net charge again, causing the errant molecule to be returned to its pI zone, Proteins of different pI become focused in different pH zones, and hence become separated.

pH gradients can be set up using polyion mixtures, and a known commercial way of achieving this is to use a mixture of ampholytes (such as those available under the name "Ampholine") in aqueous solution. These are long chain buffers having both amine and acidic groups in various proportions so as to provide a spectrum of pIs. When subjected in solution to an electrical field, the ampholytes migrate according to their individual net charges, and mutually interact to produce a pH gradient, low at the anode and high at the cathode. The mixture of proteins to be separated can then be injected into the apparatus and left to migrate to their individual equilibrium positions, or they can be introduced with the ampholytes, the latter generally being of relatively low molecular weights and establishing the required pH gradient before substantial migration of the proteins takes place. The various separated fractions can then be removed together with their carrier ampholytes, generally either by running the various zones sequential from the bottom of a vertically separating column, or by digging out the various zones of proteins and carrier ampholytes from a solidified mass. In both cases it is then necessary to separate the protein fractions from their associated carrier ampholytes.

These known methods can prove very effective for separating even proteins of close isoelectric points, but being batch processes such methods are not very convenient as commercial preparative tools. Moreover, the time taken to separate even small amounts of pure proteins may be substantial when the time required to separate them from their carrier ampholytes is included, and because the ampholytes are not available for reuse until separated from each batch of protein fractions, this can become a long and expensive overall process. However, we have now devised a way of avoiding these problems.

According to one aspect of the present invention, an electrofocusing apparatus comprises a cell having spaced electrodes and a polyion mixture for producing a pH gradient between the electrodes, characterised in that the cell has at least one inlet and a plurality of outlets placed on opposite sides of the polyion mixture such that a flowpath for liquid is provided through the cell from the inlet(s), through the polyion mixture to the outlets, the flowpath being transverse to the electric field and to the pH gradient and the outlets being spread along said electric field and pH gradient, the polyions being positioned and immobilised to provide and maintain a pK gradient from one electrode to the other, so that when immersed in an aqueous medium, application of an electrical field by the electrodes will cause migration of protons to give the pH gradient between the electrodes corresponding to the pK gradient, whereby when an aqueous mixture of separable components is caused to flow through the apparatus it may be at least partially divided by the electric field and pH gradient into its different components which leave the apparatus by different outlets.

In its simplest form, an apparatus, suitable for example for separating a single protein from an extract of animal tissues, may have a single outlet positioned to collect the required protein and a waste outlet to discharge the remainder. In general, however, we prefer to use a multioutlet apparatus, e.g. having at least five outlets, each outlet being positioned to collect a different fraction of the mixture.

Ampholytes may be used as the polyions of the present apparatus, but instead of a mixture of ampholytes being free to diffuse throughout the apparatus as previously, the polyions comprise a plurality of different ampholytes or groups of ampholytes having different pK values positioned and immobilised between the electrodes so as to provide and maintain the pK gradient. Ampholytes may be immobilised by reacting with a reactive polymerisable material, e.g. an acid group with hydroxy ethyl methacrylate or a basic group with the acid chloride of acrylic acid, applying an electric field to form them into a pH gradient, and then polymerising the material, preferable by photopolymerisation, and where appropriate in the presence of a co-monomer.

5

One preferred immobilised polyion mixture comprises a buffering mixture of acidic and basic ion exchange resins, the proportions of acidic to basic resins varying across the apparatus from one electrode to the other thereby to provide the pK gradient. Commercial ion exchange resins generally consist essentially of an immobilising inert body carrying free carboxylic acid or amino groups, the former providing an equilibrium between negatively charged $-COO^-$ groups and uncharged carboxylic acids $-COOH$ and the latter providing an equilibrium between uncharged amino $-NH_2$ and positively charged protonated ions $-NH_3^+$. The net pK of the mixture is dependent on the ratio of the two types of resin, and by varying the ratio of mixed resins sequentially across the apparatus, a pK gradient can be obtained. Some commercial resins are supplied as moist beads eg of crosslinked polystyrene carrying anchored carboxylate or amino groups to give the acidic and basic resins respectively.

The apparatus can readily be filled with a plurality of strips parallel to the electrodes and in line with the direction of flow, each strip comprising a mixture of resin proportions different from the other strips. Although this gives a stepwise pK gradient, there is no barrier between adjacent strips and in a flowing protein containing liquid, hydrogen ions can flow from one strip to another without hindrence, thereby smoothing out the steps in the produced pH gradient. This use of ion-exchange resins to provide the pK gradient, we have found to be very effective and much less expensive than the equivalent use of ampholytes.

We generally prefer the pH gradient to be of constant slope from one electrode to the other. However, where the spectrum of components of the mixture is unevenly spaced in terms of their pI values, the present apparatus enables the slope of the pH gradient readily to be varied from one position to another Thus for example the slope of the pH gradient may be made steeper at one end than the other when the pI values of the mixture's constituents are more widely spaced at that end than the other, thereby providing more evenly spaced peaks in the outflowing liquids.

The sharpness of the peaks depends on the matching of the apparatus to the separation required, and how well mixing of the separated streams can be prevented. Thus for example, although the apparatus can be capable of covering a wide range of pH, where the requirement is for the separation of two proteins of similar pI, a much smaller range of pH from anode to cathode is preferred, The length of apparatus and fluid flow rates can also be varied according to requirements. To minimise mixing, a broad flat cell is preferred, so that the solution flows through as a thin sheet with the electrodes along the edges.

According to a further aspect of the invention, an electrofocusing method of separating zwitter ions from a mixture of zwitter ions having different isoelectric points, comprises causing an aqueous solution of the mixture to flow through an apparatus having immobilised polyion mixture arranged between a pair of spaced electrodes to induce in the flowing solution a pH gradient transverse to the fluid flow and extending substantially from one electrode to the other and thereafter dividing the flowing liquid into at least two portions of different pH. In practice it is usually desirable to divide the solution into considerably more than two portions, e.g. ten portions, and this can be achieved by subdividing the outflow from the apparatus into portions, from the anode side to the cathode side.

The invention is illustrated by reference to a specific apparatus shown in the accompanying drawings, in which

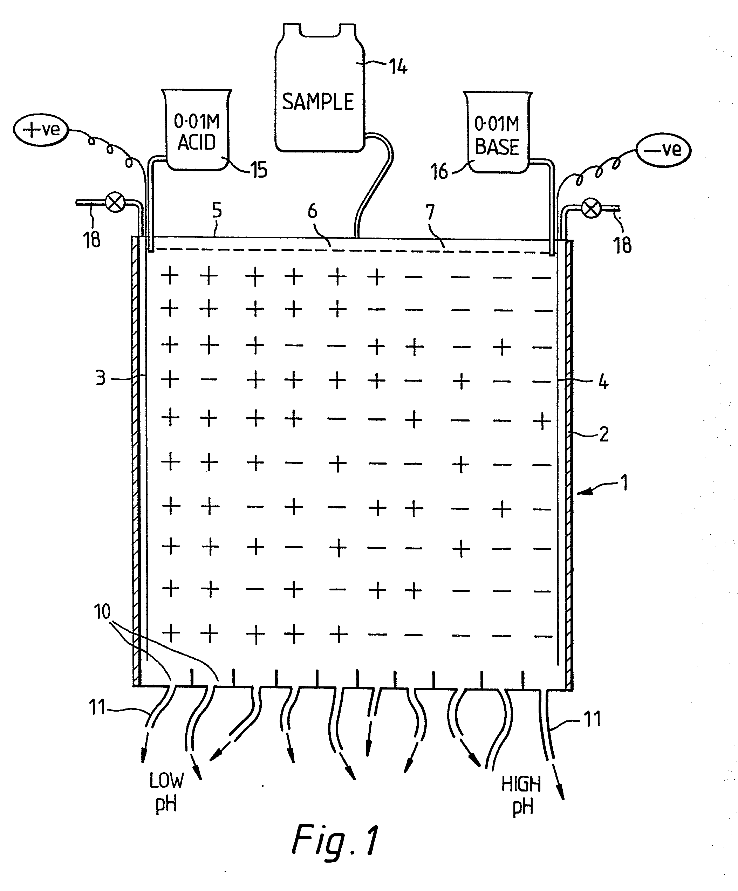

Figure 1 is a diagramatic representation of the apparatus and

Figure 2 is a graph obtained from experimental results.

The apparatus comprises a flat cell 1 formed from two transparent acrylic sheets about 20 cm square, separated by a 2 mm thick gasket 2 around the edges. Down each side within the cell is an electrode 3,4 connected to provide an anode and cathode respectively. Near the top 5 of the cell is a porous barrier 6 providing an enclosed chamber 7 above it. At the lower end the cell is divided into ten short channels 10 from each of which emerges a flexible pipe 11 passing through a peristaltic pump (not shown).

The cell is filled with various mixtures of two ion exchange resins, the mixtures being arranged in vertical strips with the proportions varying stepwise from one electrode to the other. Adjacent to the cathode is a strip packed with polystyrene beads carrying free carbo ylate groups. Adjacent to the anode is a strip packed with beads carrying free amino groups. Intermediate strips contain mixtures of the two resins such that the compositions change progressively, strip by strip, from the anode strip to the cathode strip. There is no formal division between adjacent strips, the cell having been filled from one side to the other, each strip having been laid onto an adjacent strip laid before it.

For supplying liquids to the cell, are three reservoirs. These are a sample reservoir 14 and reservoirs 15 & 16 of dilute acid and base solutions repectively. The sample reservoir is connected to the chamber 7 where the liquid containing the mixture to be separated, can distribute itself across the width of the cell. The other two reservoirs are for supplying acidic and basic environments respectively for the two electrodes and tubes from them open into the cell adjacent to the tops of the two electrodes. Gas vents 18 are provided above the electrode regions.

In use the cell is filled with aqueous liquid and the electric field is activated by connecting the electrodes to an electrical source. The pK gradient immobilised in the ion exchange resin mixture produces a pH gradient rising from the anode to the cathode. The peristaltic pump is operated to draw liquid through all ten outlet tubes simultaneously, and thereby provide a sheet of liquid moving uniformly down through the resin-filled cell, with the electric field and pH gradient both transverse to the flow; although in practice we have tended to have some unintentional non-uniformity in the flow at the edges. The solution of mixed proteins (or other separable species) is supplied from the sample reservoir 14, and by utilising the chamber 7 the sample liquid can be drawn from the chamber over substantially the whole width of the resin mixtures. As the solution flows downwards the proteins become focused into specific pH zones in the manner described above. Analysis of the ten outlets should show progressively increasing pH from the anode side to the cathode side, with the proteins distributed to peak in specific outlets corresponding to their pI values, the fewer the number of outlets through which each appears (i.e. the sharper the distribution peaks), the more efficient the separation.

The invention is further illustrated by the following experimental results obtained in an apparatus essentially similar to that shown in the drawing, except that no gas vents 18 were provided and the cell was used horizonally. The purpose was to determine whether a pH gradient became established in the liquid flowing through the cell, and whether a protein would become focused. The protein used was a commercial grade of bovine serum albumen and this was measured by optical absorption at 280 nm in a 1 mm UV spectrometer cell. The resins used were a Duolite No C436 and Duolite No. A303 marketed by BDH Chemicals.

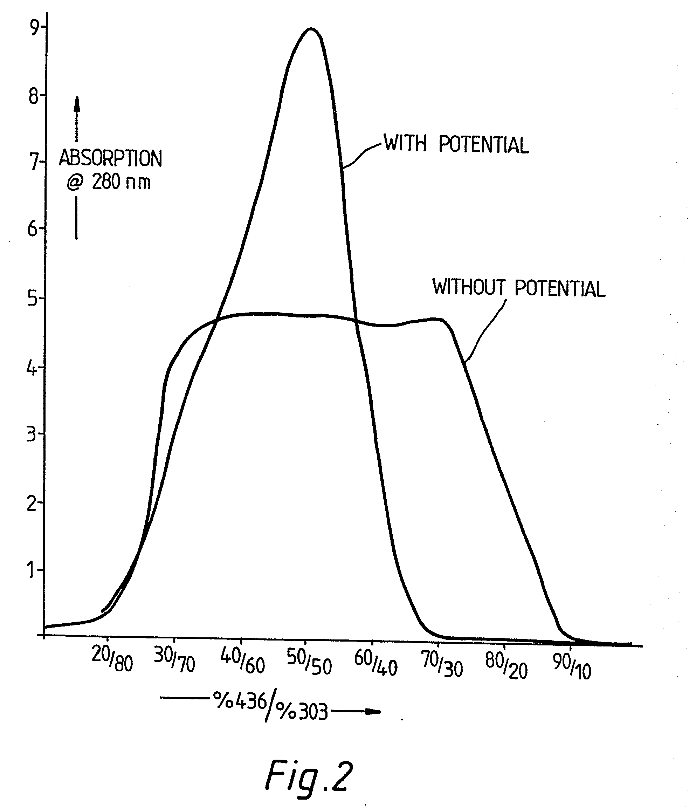

Initially it was not known whether the peristaltic pump would control the flow sufficiently to prevent edge effects, or how the provision of the acid and basic feeds at the electrodes would affect the flow. It was found that on switching off the electrical field, the pH gradient decayed slowly, so as an initial control experiment, the peristaltic pump was started with water in the sample reservoir and 0.01 M acid and base solutions in the outer reservoirs as shown, the electric field being switched on. When conditions settled down, the electric field was switched off and the water in the sample reservoirs was replaced by a 1% wt/volume aqueous solution of the protein. The results obtained are given in Table 1 below, and the absorptions obtained are shown graphically in Figure 2 and labelled "without potential".

Table 1

| Resin Mixture 436%/303% | Absorption @ 280 nm | pH of Effluent |
|---|---|---|
| 100 / 0 | 0.05 | 10.08 |
| 90 / 10 | 0.06 | 7.25 |
| 80 / 20 | 1.84 | 7.02 |
| 70 / 30 | 4.80 | 6.51 |
| 60 / 40 | 4.70 | 5.86 |
| 50 / 50 | 4.80 | 5.38 |
| 40 / 60 | 4.80 | 5.42 |
| 30 / 70 | 4.20 | 5.58 |
| 20 / 80 | 0.31 | 4.54 |
| 10 / 90 | 0.10 | 2.37 |

10

A potential of 500 V was then applied across the electrodes, and the ten outlets again sampled. The results are shown numerically in Table II, and graphically in Figure 2, these results being labelled "with potential".

Table II

| Resin Mixture % 436 / % 303 | Absorption @ 280 nm | pH of Effluent |
|---|---|---|
| 100 / 0 | 0.07 | 12.78 |
| 90 / 10 | 0.03 | 8.31 |
| 80 / 20 | 0.04 | 8.65 |
| 70 / 30 | 0.06 | 8.72 |
| 60 / 40 | 3.40 | 7.05 |
| 50 / 50 | 9.00 | 5.31 |
| 40 / 60 | 5.70 | 3.81 |
| 30 / 70 | 3.10 | 2.90 |
| 20 / 80 | 0.34 | 2.40 |
| 10 / 90 | 0.13 | 2.14 |

Under optimun flow conditions, the protein should be distributed evenly across the cell in the absence of any focusing potential. Hence the graph obtained without an applied potential should then be a straight line indicating a constant absorption across the width of the cell. As may be seen, there was a substantial edge effect in this prototype apparatus. However, when the electrical field was applied, significant focusing was obtained, as is clearly shown by comparison of the graph labelled "with potential" with that obtained in the control experiment without the field. A sharp peak was obtained at a pH of about 5,3.

CLAIMS

1. Electrofocusing apparatus comprising a cell having spaced electrodes and a polyion mixture for producing a pH gradient between the electrodes, characterised in that the cell has at least one inlet and a plurality of outlets placed on opposite sides of the polyion mixture such that a flowpath for liquid is provided through the cell from the inlet(s), through the polyion mixture, to the outlets, the flowpath being transverse to the electric field and to the pH gradient, and the outlets being spaced along said electric field and pH gradient, the polyions being positioned and immobilised to provide and maintain a pK gradient from one electrode to the other, so that when immersed in an aqueous medium, application of an electrical field by the electrodes will cause migration of protons to give the pH gradient between the electrodes corresponding to the pK gtadient, whereby when an aqueous liquid mixture of separable components is caused to flow through the apparatus it may be at least partially divided by the electric field and pH gradient into its different components which leave the apparatus by different outlets.

2. Apparatus as claimed in claim 1 having at least five outlets, each outlet being positioned to collect a different fraction of the mixture.

3. Apparatus as claimed in claim 1 or claim 2, characterised in that the polyions comprise a plurality of different ampholytes or groups of ampholytes having different pK values positioned and immobilised between the electrodes so as to provide and maintain the pK gradient.

4. Apparatus as claimed in claim 3 wherein the ampholytes are immobilised by reacting them with a reactive polymerisable material, applying an electric field to form them into a pH gradient, and then polymerising the material optionally in the presence of a comonomer.

5. Apparatus as claimed in claim 1 or claim 2 characterised in that the immobilised polyion mixture comprises a buffering mixture of acidic and basic ion exchange resins, the proportions of acidic to basic resins varying across the apparatus from one electrode to the other thereby to provide the pK gradient.

6. Apparatus as claimed in claim 5 comprising a plurality of strips parallel to the electrodes and in line with the direction of flow, each strip comprising a mixture of resin proportions different from the other strips, thereby giving a stepwise pK gradient.

7. An electrofocusing method of separating zwitter ions from a mixture of zwitter ions having different isoelectric points, comprises causing an aqueous solution of the mixture to flow through an apparatus having an immobilised polyion mixture arranged between a pair of spaced electrodes to induce in the flowing solution a pH gradient transverse to the fluid flow and extending substantially from one electrode to the other and thereafter dividing the flowing liquid into at least two portions of different pH.

*Fig.1*

Fig.2